# EUROPEAN PATENT APPLICATION

(11) **EP 0 888 007 A1**
(43) Date of publication of application: **30.12.1998**
(21) Application number: 97906872.3
(22) Date of filing: 11.03.1997
(51) Int. Cl.: H04N 5/91, H04N 5/92

(54) **METHOD AND DEVICE FOR PARTIALLY EDITING DIGITAL COMPRESSED DATA**

(30) Priority: 13.03.1996 JP 55244/96
(71) Applicant: DAIKIN INDUSTRIES, LTD., Kita-ku, Osaka 530 (JP)
(72) Inventor: OTSUKA, Masato, Kusatsu-shi, Shiga 525 (JP); INADA, Ryozo, Kusatsu-shi, Shiga 525 (JP)
(74) Representative: Prüfer, Lutz H., Dipl.-Phys.
(86) International application number: JP9700762
(87) International publication number: WO9734415

(57) **Abstract**

A desired part of digital compressed data is edited by only processing the part of the data without generating discontinuity in the data at the time of expanding the data, by providing first and second connection frames the numbers of which are prescribed immediately before and after the digital compressed data to be edited, determining the number of frames to be effect-processed between the first and second connection frames, expanding the first and second connection frames, preparing non-compressed data of the frames to be effect-processed, effect-processing the non-compressed data, again digitally compressing the non-compressed data, and inserting the first connection frames, effect-processed frames, and second connection frames between the digitally compressed data before the first connection frames and the digitally compressed data after the second connected frames.

## Description

### Technical Field

The present invention relates to a method for editing digital compressed data partially and an apparatus thereof. More particularly, the present invention relates to a method and an apparatus for editing digital compressed data partially, the digital compressed data including digital compressed video data and digital compressed audio data which are reproduced using information dependent on prior frames and later frames between frames.

### Related Art

In the past, non-compressed data was obtained by expanding digital compressed data in its entirety, effecting editing was then applied to a desired position of the non-compressed data, and the non-compressed data was applied digital compression again thereafter, when the effecting editing such as wipe (changing from a first image to a second image), dissolve (erasing an image towards its center) and the like is applied to a partial portion of digital compressed data, the digital compressed data including digital compressed video data and digital compressed audio data which are reproduced using information dependent on prior frames and later frames between frames.

When this method is employed, partial editing with no disadvantages seems to be performed, because an effecting processing is applied under a condition that digital compressed data is returned to non-compressed data and digital compressing processing is applied again thereafter so as to secure data continuity in the digital compressed data in its entirety.

When the above method is employed, the expanding processing and the digital compressing processing for the second time are required for the entire data even when a quantity of digital compressed data which are objected for effecting editing is extremely small with respect to the entire data quantity. Therefore, a required time period becomes an extremely long time period. Further, the other digital compressed data other than the digital compressed data objected for effecting editing is merely applied the expanding processing and the digital compressing processing for the second time thereafter so that quality (picture quality, sound quality) in the other digital compressed data is lower than the quality in the original digital compressed data.

To dissolve these disadvantages, it is thought that only the digital compressed data objected for effecting editing is expanded and is applied the effecting processing, the digital compressing processing is applied again, and the digital compressed data is inserted in the original digital compressed data. In this case, frames in the original digital compressed data and frames in the digital compressed data to which is applied digital compressing processing for the second time are applied digital compressing processing in an independent condition from one another, respectively. Therefore, video data and audio data become discontinuous when the digoital compressed data is expanded for reproduction. Consequently, it seems impossible to employ this method.

Further, similar disadvantages arise when two blocks of digital compressed data are connected to one another, each digital compressed data is applied digital compressing processing independently from the other digital compressed data.

### Summary Of The Invention

The present invention was made in view of the above problems.

It is an object of the present invention to offer a method and apparatus for editing digital compressed data partially which applies editing processing only to partial digital compressed data without the generating of discontinuity of data, the discontinuity being generated in the expanded data which is obtained by expanding only a required region of the digital compressed data.

A method for editing digital compressed data partially of an embodiment according to the present invention comprises the steps of,
a first determining step for determining first connecting frames having a predetermined number of frames just prior to digital compressed data objected for editing,
a second determining step for determining second connecting frames having a predetermined number of frames just after the digital compressed data objected for editing,
a third determining step for determining a number of frames objected for editing between the first connecting frames and the second connecting frames,
an expanding step for applying an expanding processing to the first connecting frames and the second connecting frames,
a generating step for generating non-compressed data having the number of frames objected for editing based upon the first connecting frames and/or the second connecting frames,
an editing and compressing step for applying an editing processing to the non-compressed data having the number of frames objected for editing and for applying a digital compressing processing for a second time thereafter, and
an inserting step for inserting the first connecting frames, frames applied editing processing, and the second connecting frames between the digital compressed data which is prior to the first connecting frames and the digital compressed frames which is after the second connecting frames.

A method for editing digital compressed data partially of another embodiment according to the present invention employs the digital compressed data which includes digital compressed video data and/or digital compressed audio data.

A method for editing digital compressed data partially of a further embodiment according to the present invention employs a processing for performing an effecting processing as the editing processing.

An apparatus for editing digital compressed data partially of an embodiment according to the present invention comprises,
a connecting frame determining means for determining first connecting frames having a predetermined number of frames just prior to digital compressed data objected for editing and for determining second connecting frames having a predetermined number of frames just after the digital compressed data objected for editing,
a frame number determining means for determining a number of frames objected for editing between the first connecting frames and the second connecting frames,
a non-compressed data generating means for applying an expanding processing to the first connecting frames and the second connecting frames and for generating non-compressed data having the number of frames objected for editing based upon the first connecting frames and/or the second connecting frames,
an editing processing means for applying an editing processing to the non-compressed data having the number of frames objected for editing and for applying a digital compressing processing for a second time thereafter, and
a stream connecting means for inserting the first connecting frames, frames applied editing and second connecting frames between the digital compressed data which is prior to the first connecting frames and the digital compressed data which is after the second connecting frames.

An apparatus for editing digital compressed data partially of another embodiment according to the present invention employs the digital compressed data which includes digital compressed video data and/or digital compressed audio data.

An apparatus for editing digital compressed data partially of a further embodiment according to the present invention employs a processing for performing an effecting processing as the editing processing.

When the method for editing digital compressed data partially of an embodiment according to the present invention is employed, the first connecting frames having the predetermined number of frames just prior to the digital compressed data objected for editing are determined, the second connecting frames having the predetermined number of frames just after the digital compressed data objected for editing are determined, the number of frames objected for editing between the first connecting frames and the second connecting frames is determined, the first connecting frames and the second connecting frames are applied the expanding processing, the non-compressed data having the number of frames objected for editing is generated based upon the first connecting frames and/or the second connecting frames, the non-compressed data having the number of frames objected for editing is applied the editing processing and is applied the digital compressing processing for the second time thereafter, and the first connecting frames, the frames applied editing processing and the second connecting frames are inserted between the digital compressed data which is prior to the first connecting frames and the digital compressed frames which is after the second connecting frames, for performing editing to the compressed data partially, the digital compressed data being reproduced using information dependent on prior and later frames between frames.

Therefore, coordination is maintained between the original-digital compressed data and the digital compressed data which is applied the editing processing. As a result, a disadvantage is prevented from occurring that discontinuity is generated between the original digital compressed data and the digital compressed data which is applied the editing processing when the digital compressed data are expanded in its entirety and is reproduced after the editing processing has been applied. Of course, the quantity of data can be decreased which is applied the expanding processing, editing processing and the digital compressing processing for the second time so that a required time period can be shortened for the entire processing. Further, lowering in image quality and/or sound quality is prevented from increasing because data not objected for editing processing is not applied the digital compressing processing for the second time.

When the method for editing digital compressed data partially of another embodiment according to the present invention is employed, operations and function which are similar to those of the above embodiment can be realized because the method employs the digital compressed data which includes digital compressed video data and/or digital compressed audio data.

When the method for editing digital compressed data partially of a further embodiment according to the present invention is employed, the data objected for the editing processing is applied the digital compressing processing for the second time so that the image quality and/or sound quality is lowered. But, lowering in image quality and/or sound quality for this portion is insignificant because the image quality and/or sound quality is of little account due to applying the effecting processing within the editing processing. Therefore, the editing with high quality in its entirety is performed. Further, operations and function which are similar to those of the above embodiments can be realized.

When the apparatus for editing digital compressed data partially of an embodiment according to the present invention is employed, the first connecting frames having a predetermined number of frames are determined just prior to digital compressed data objected for editing and the second connecting frames having a predetermined number of frames are determined just after the digital compressed data objected for editing by the connecting frame determining means, the number of frames objected for editing between the first connecting frames and the second connecting frames is determined by the frame number determining means, the expanding processing is applied to the first connecting frame and the second connecting frames and the non-compressed data having the number of frames objected for editing is generated based upon the first connecting frames and/or the second connecting frames by the non-compressed data generating means, the editing processing is applied to the non-compressed data having the number of frames objected for editing and the digital compressing processing is applied for the second time thereafter by the editing processing means, and the first connecting frames, the frames applied editing and second connecting frames are inserted by the stream connecting means between the digital compressed data which is prior to the first connecting frames and the digital compressed data which is after the second connecting frames, for performing editing to the compressed data partially, the digital compressed data being reproduced using information dependent on prior and later frames between frames.

Therefore, coordination is maintained between the original digital compressed data and the digital compressed data to which is applied the editing processing. As a result, a disadvantage is prevented from occurring that discontinuity is generated between the original digital compressed data and the digital compressed data to which is applied the editing processing when the digital compressed data are expanded in its entirety and is reproduced after the editing processing has been applied. Of course, the quantity of data can be decreased which is applied the expanding processing, editing processing and the digital compressing processing for the second time so that a required time period can be shortened for the entire processings. Further, lowering in image quality and/or sound quality is prevented from increasing because data not objected for editing processing is not applied the digital compressing processing for the second time.

When the apparatus for editing digital compressed data partially of another embodiment according to the present invention is employed, operations and function which are similar to those of the apparatus embodiment can be realized because the apparatus employs the digital compressed data which includes digital compressed video data and/or digital compressed audio data.

When the apparatus for editing digital compressed data partially of a further embodiment according to the present invention is employed, the data objected for the editing processing is applied the digital compressing processing for the second time so that the image quality and/or sound quality is lowered. But, lowering in image quality and/or sound quality for this portion is insignificant because the image quality and/or sound quality is of little account due to applying the effecting processing within the editing processing. Therefore, the editing with high quality in its entirety is performed. Further, operations and function which are similar to those of the above apparatus embodiments can be realized.

### Brief Description Of The Drawings

Figure 1 is a flowchart explaining a method for editing digital compressed data partially of an embodiment according to the present invention;
Figure 2 is a diagram illustrating a processing flow based upon the flowchart illustrated in Fig. 1; and
Figure 3 is a block diagram illustrating an apparatus for editing digital compressed data partially of an embodiment according to the present invention.

### Best Mode For Performing The Invention

Hereinafter, referring to the attached drawings, we explain embodiments of the present invention in detail.

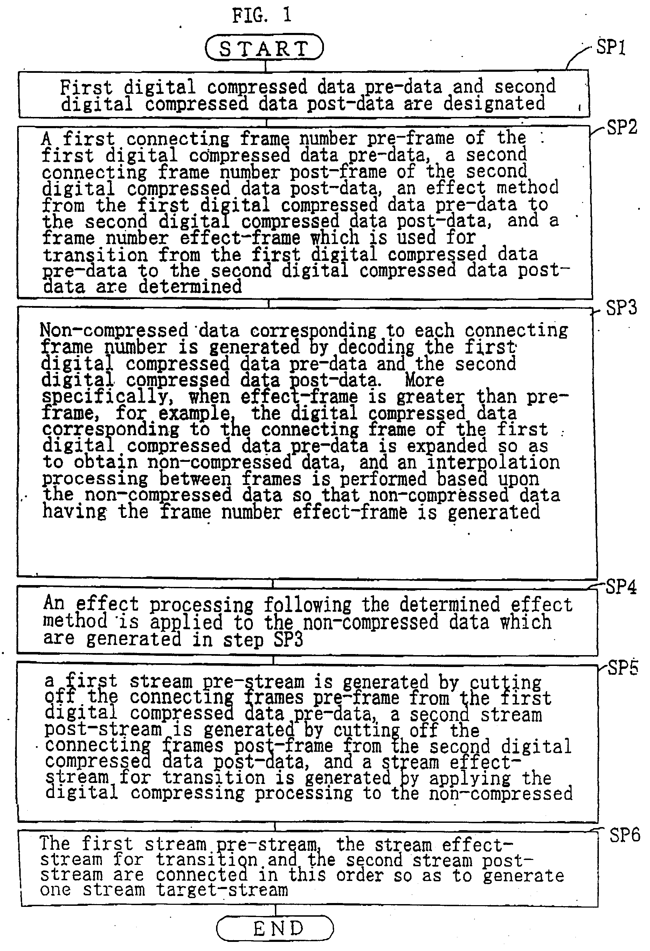

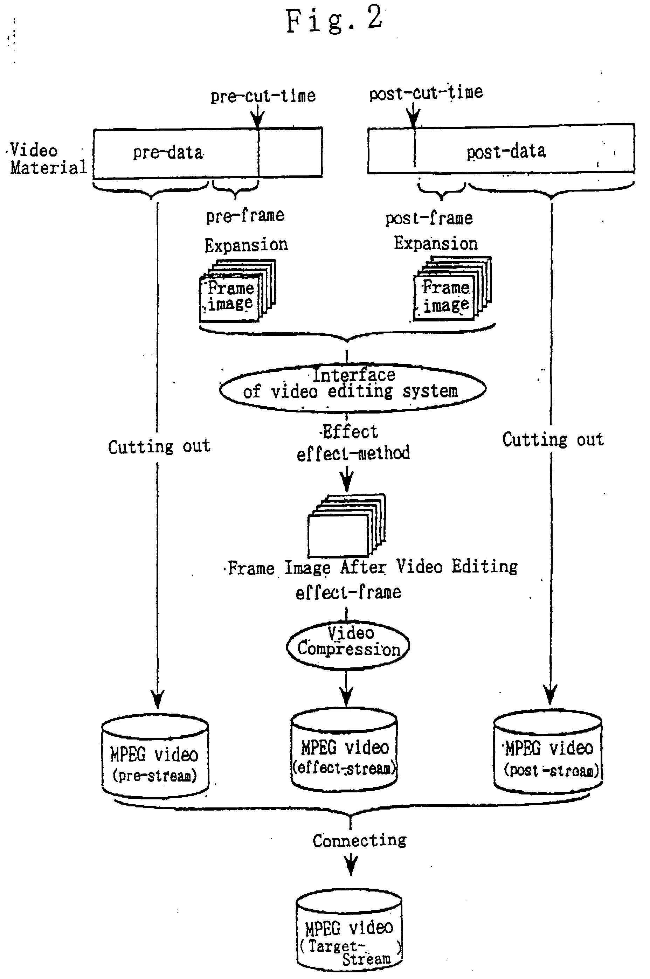

Fig. 1 is a flowchart explaining a method for editing digital compressed data partially of an embodiment according to the present invention, while Fig. 2 is a diagram schematically illustrating a processing flow based upon the flowchart illustrated in Fig. 1.

In step SP1, first digital compressed data (digital compressed data includes digital compressed video data and digital compressed audio data) pre-data, and a second digital compressed data post-data are designated. The first digital compressed data corresponds to a predetermined time extent including digital compressed data at an editing starting timing, while the second digital compressed data corresponds to a predetermined time extent including digital compressed data at an editing finishing timing. Each digital compressed data may be partial data within 1 stream. Each digital compressed data also may be data within a stream which is different from a stream for other digital compressed data. Further, the first digital compressed data pre-data is cut off digital compressed data which is after a first time pre-cut-time, while the second digital compressed data post-data is cut off digital compressed data which is prior to a second time post-cut-time. The first time pre-cut-time is an editing starting time, while the second time post-cut-time is an editing finishing time.

In step SP2, a first connecting frame number pre-frame of the first digital compressed data pre-data, a second connecting frame number post-frame of the second digital compressed data post-data, an effect method from the first digital compressed data pre-data to the second digital compressed data post-data, and a frame number effect-frame which is used for transition (changing) from the first digital compressed data pre-data to the second digital compressed data post-data are determined. The frame number effect-frame which is used for transition (changing) is a number which is determined by determining a group of images as a connecting unit, the group of images including a coding image within a frame at its leading section. The frame number effect-frame can be determined arbitrarily.

Then in step SP3, non-compressed data corresponding to each connecting frame number is generated by decoding the first digital compressed data pre-data and the second digital compressed data post-data. More specifically, when effect-frame is greater than pre-frame, for example, the digital compressed data corresponding to the connecting frame of the first digital compressed data pre-data is expanded so as to obtain non-compressed data, and an interpolation processing between frames is performed based upon the non-compressed data so that non-compressed data having the frame number effect-frame is generated. When effect-frame is greater than post-frame, the digital compressed data corresponding to the connecting frame of the second digital compressed data post-data is expanded so as to obtain non-compressed data, and an interpolation processing between frames is performed based upon the non-compressed data so that non-compressed data corresponding to the frame number effect-frame is generated. On the contrary, when effect-frame is smaller than pre-frame, frames are thinned at every pre-frame/effect-frame so as to obtain non-compressed data under a condition that effect-frame is a divider of pre-frame. When effect-frame is smaller than pre-frame, the connecting frame of the first digital compressed data pre-data is expanded so as to obtain non-compressed data under a condition that effect-frame is not a divider of pre-frame. Thereafter, non-compressed data corresponding to the frame number effect-frame is generated by performing an interpolation processing between frames based upon the non-compressed data. When effect-frame is smaller than post-frame, frames are thinned at every post-frame/effect-frame so as to obtain non-compressed data under a condition that effect-frame is a divider of post-frame. When effect-frame is smaller than post-frame, the connecting frame of the second digital compressed data post-data is expanded so as to obtain non-compressed data under a condition that effect-frame is not a divider of post-frame. Thereafter, non-compressed data corresponding to the frame number effect-frame is generated by performing an interpolation processing between frames based upon the non-compressed data.

In these cases, when a static image is influenced by the connecting frames of the first digital compressed data pre-data and by the connecting frames of the second digital compressed data post-data, the static image is generated by performing operations respectively following the effect method and by performing a composing processing.

Then in step SP4, an effect processing following the determined effect method is applied to the non-compressed data which are generated in step SP3.

In step SP5, a first stream pre-stream is generated by cutting off the connecting frames pre-frame from the first digital compressed data pre-data, a second stream post-stream is generated by cutting off the connecting frames post-frame from the second digital compressed data post-data, and a stream effect-stream for transition is generated by applying the digital compressing processing to the non-compressed data which is applied the effect processing.

Thereafter, in step SP6, the first stream pre-stream, the stream effect-stream for transition and the second stream post-stream are connected in this order so as to generate one stream target-stream. Then, the series of processings is finished.

In the above description, editing processings for only video data are described. it is possible that a conventional editing method is employed for audio data. It is also possible that the method of this embodiment is employed for video data and audio data.

When one edited stream target-stream is generated by performing the series of processings, a quantity of data which should be applied the expanding processing and the digital compressing processing for the second time is extremely decreased in comparison to the entire data so that a required time period is decreased greatly. Further, values which are limited between frames are guaranteed such as continuity in a reproduction buffer size of the edited digital compressed data because the connecting frame numbers pre-frame, post-frame are determined.

The continuity in a reproduction buffer size is guaranteed in the following manner.

An initial value of the reproduction buffer for the frame used for transition is applied the digital compressing processing so as to maintain continuity with the value of the last buffer for the connecting frames of the first digital compressed data pre-data. Further, at the same time, the final value of the reproduction buffer is applied the digital compressing processing so as to maintain continuity with the initial value of the connecting frames of the second digital compressed data post-data by adjusting a compression rate of the frames which are used for transition.

Furthermore, even when no video data and audio data exist which are the basis for digital compression, lowering in image quality and sound quality is not caused for a remaining portion other than a portion to which the digital compressing processing is applied for the second time so that partial editing with high quality is performed. The portion to which the digital compressing processing is applied is lowered in its image quality and in its sound quality. But, the lowering in its image quality and in its sound quality is insignificant because the requirement in image quality and in sound quality for the portion which is applied the effecting processing is not so severe.

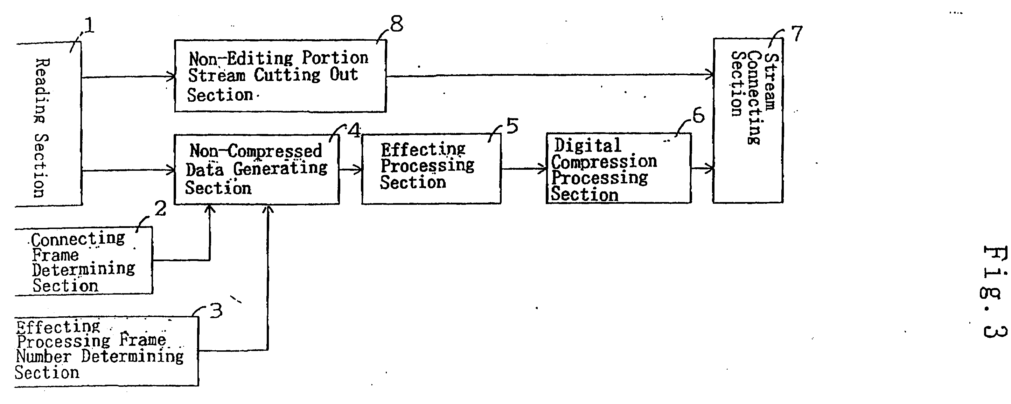

Fig. 3 is a block diagram illustrating an apparatus for editing digital compressed data partially of an embodiment according to the present invention.

The apparatus comprises,
a reading section 1 for taking in digital compressed video data and digital compressed audio data,
a connecting frame determining section 2 for determining first connecting frames having a predetermined number of frames just prior to digital compressed data objected for editing and for determining second connecting frames having a predetermined number of frames just after the digital compressed data objected for editing,
a frame number determining section 3 for determining a number of frames objected for editing between the first connecting frames and the second connecting frames,
a non-compressed data generating section 4 for applying an expanding processing to the first connecting frames and the second connecting frames and for generating non-compressed data having the number of frames objected for editing based upon the first connecting frames and/or the second connecting frames,
an effecting processing section 5 for applying an effecting processing to the non-compressed data having the number of frames objected for effecting,
a digital compression processing section 6 for applying a digital compressing processing for the second time to the non-compressed data which has applied the effecting processing, and
a stream connecting section 7 for inserting the first connecting frames, frames applied editing and second connecting frames between the digital compressed data which is prior to the first connecting frames and the digital compressed data which is after the second connecting frames. The effecting processing section 5 and the digital compression processing section 6 make up a cutting editing processing means.

When this embodiment is employed, operations and function which are similar to those of the flowchart illustrated in Fig. 1 are realized. When one edited stream target-stream is generated, a quantity of data which should be applied the expanding processing and the digital compressing processing for the second time is extremely decreased in comparison to the entire data so that a required time period is decreased greatly. Further, values which are limited between frames are guaranteed such as continuity in a reproduction buffer size of the connected digital compressed data because the connecting frame numbers pre-frame, post-frame are determined.

Furthermore, even when no video data and audio data exist which are the basis for digital compression, lowering in image quality and sound quality is not caused for a remaining portion other than a portion to which the digital compressing processing is applied for the second time so that partial editing with high quality is performed. The portion to which the digital compressing processing is applied is lowered in its image quality and in its sound quality. But, the lowering in its image quality and in its sound quality is insignificant because the requirement in image quality and in sound quality for the portion which is applied the effecting processing is not so severe.

In the above embodiments, cases are described in which the cutting editing processing including the effecting processing are applied. It is of course possible that these embodiments are applicable to a cutting editing processing excluding the effecting processing.

### Possibility In Industrial Utilization

As is apparent from the foregoing, the method for editing digital compressed data partially and the apparatus thereof perform the following operation.

The first connecting frames having the predetermined number of frames just prior to the digital compressed data objected for editing are determined, the second connecting frames having the predetermined number of frames just after the digital compressed data objected for editing are determined, the number of frames objected for editing between the first connecting frames and the second connecting frames is determined, the first connecting frames and the second connecting fries are applied the expanding processing, the non-compressed data having the number of frames objected for editing is generated based upon the first connecting frames and/or the second connecting frames, the non-compressed data having the number of frames objected for editing is applied the editing processing and is applied the digital compressing processing for the second time thereafter, and the first connecting frames, the frames applied editing processing and the second connecting frames are inserted between the digital compressed data which is prior to the first connecting frames and the digital compressed fries which is after the second connecting frames.

Therefore, no discontinuity is generated between the original digital compressed data and the digital compressed data which is applied the editing processing when the digital compressed data are expanded in its entirety. The editing processing is performed for only partial digital compressed data by performing the processing for a required portion among the digital compressed data in its entirety. As a result, the method for editing digital compressed data partially and the apparatus thereof are preferably applicable to an editing apparatus for editing digital compressed data.

## Claims

1. A method for editing digital compressed data partially which method edits a partial portion of digital compressed data, the digital compressed data being reproduced using information dependent on prior frames and later frames between frames, the method comprising the steps of;
a first determining step for determining first connecting frames having a predetermined number of frames just prior to digital compressed data objected for editing;
a second determining step for determining second connecting frames having a predetermined number of frames just after the digital compressed data objected for editing;
a third determining step for determining a number of frames objected for editing between the first connecting frames and the second connecting frames;
an expanding step for applying an expanding processing to the first connecting frames and the second connecting frames;
a generating step for generating non-compressed data having the number of frames objected for editing based upon the first connecting frames and/or the second connecting frames;
an editing and compressing step for applying an editing processing to the non-compressed data having the number of fries objected for editing and for applying a digital compressing processing for a second time thereafter; and
an inserting step for inserting the first connecting frames, frames applied editing processing, and the second connecting frames between the digital compressed data which is prior to the first connecting frames and the digital compressed frames which is after the second connecting frames.

2. A method for editing digital compressed data partially as set forth in claim 1, wherein digital compressed data including digital compressed video data and/or digital compressed audio data is employed as the digital compressed data.

3. A method for editing digital compressed data partially as set forth in claim 1 or claim 2, wherein an editing processing for performing an effecting processing is employed as the editing processing.

4. An apparatus for editing digital compressed data partially which apparatus edits a partial portion of digital compressed data, the digital compressed data being reproduced using information dependent on prior frames and later frames between frames, the apparatus comprising;
a connecting frame determining means (2) for determining first connecting frames having a predetermined number of frames just prior to digital compressed data objected for editing and for determining second connecting frames having a predetermined number of frames just after the digital compressed data objected for editing;
a frame number determining means (3) for determining a number of frames objected for editing between the first connecting frames and the second connecting frames;
a non-compressed data generating means (4) for applying an expanding processing to the first connecting frames and the second connecting frames and for generating non-compressed data having the number of frames objected for editing based upon the first connecting frames and/or the second connecting frames;
an editing processing means (5) (6) for applying an editing processing to the non-compressed data having the number of frames objected for editing and for applying a digital compressing processing for a second time thereafter; and
a stream connecting means (7) for inserting the first connecting frames, frames applied editing, and second connecting frames between the digital compressed data which is prior to the first connecting frames and the digital compressed data which is after the second connecting frames.

5. An apparatus for editing digital compressed data partially as set forth in claim 4, wherein digital compressed data including digital compressed video data and/or digital compressed audio data is employed as the digital compressed data.

6. An apparatus for editing digital compressed data partially as set forth in claim 4 or claim 5, wherein the cutting editing processing means (5) is an editing processing means for performing an effecting processing in addition.
